# EUROPÄISCHE PATENTSCHRIFT

(11) **EP 2 708 768 B1**
(45) Veröffentlichungstag und Bekanntmachung des Hinweises auf die Patenterteilung: **20.03.2019**
(21) Anmeldenummer: 13180797.6
(22) Anmeldetag: 19.08.2013
(51) Int. Cl.: F16D 28/00, B60K 6/387, F16D 23/14

(54) **ANTRIEBSEINHEIT FÜR EIN KRAFTFAHRZEUG MIT EINER ELEKTRISCHEN MASCHINE UND EINER KUPPLUNG**
DRIVE UNIT FOR A MOTOR VEHICLE WITH AN ELECTRICAL MACHINE AND A COUPLING
UNITÉ D'ENTRAÎNEMENT POUR UN VÉHICULE AUTOMOBILE DOTÉ D'UNE MACHINE ÉLECTRIQUE ET D'UN EMBRAYAGE

(30) Priorität: 18.09.2012 DE 102012216601
(43) Veröffentlichungstag der Anmeldung: 19.03.2014
(73) Patentinhaber: ZF Friedrichshafen AG, 88046 Friedrichshafen (DE)
(72) Erfinder: Ratte, Andreas, 97456 Dittelbrunn (DE); Viernekes, Gerald, 97437 Hassfurt (DE); Markow, Alexander, 97421 Schweinfurt (DE)

(56) Entgegenhaltungen:
- EP-A2- 2 448 092
- EP-B1- 0 716 242
- DE-A1-102008 058 900
- US-A1- 2007 137 911

## Beschreibung

Die Erfindung betrifft eine Antriebseinheit für ein Kraftfahrzeug gemäß dem Oberbegriff des unabhängigen Patentanspruchs.

Eine derartige gattungsgemäße Antriebseinheit ist beispielweise mit der EP 2 148 107 B1 oder der EP 2 448 092 A2 bekannt geworden und kann allein oder in Verbindung mit einem Verbrennungsmotor im Antriebsstrang eines Kraftfahrzeuges eingesetzt werden. Die in Baueinheit mit einer elektrischen Maschine ausgeführte Kupplung kann den Rotor der elektrischen Maschine mittels einer innerhalb des Stators angeordneten Betätigungseinrichtung je nach Betriebszustand an ein weiteres Antriebselement des Fahrzeugantriebsstrangs, hier insbesondere an einen Verbrennungsmotor an- oder abkoppeln. Die Betätigungseinrichtung ist dort vorzugsweise als hydraulisch oder pneumatisch arbeitender Zentralausrücker vorgesehen.

Als nachteilig werden bei dieser Baueinheit ein sich durch die Verlegung der Druckübertragungsleitungen der Kupplungsbetätigungseinrichtung ergebender relativ hoher Installationsaufwand und ein entsprechend großer Bauraumbedarf empfunden. Zudem können die Übersetzungsverhältnisse der Betätigungseinrichtung durch eine erforderliche lange Druckleitungsführung und durch die Temperaturabhängigkeit des eingesetzten Fluids variieren und somit einen gewünschten Betrag des Ausrückhubs der Kupplung ungünstig beeinflussen.

Die EP 0 716 242 B1 offenbart eine nicht zur eingangs genannten Gattung zugehörige Betätigungseinrichtung mit einem elektromotorischen Antrieb für eine mittels einer Membranfeder betätigbaren Fahrzeugreibungskupplung. Der elektromotorische Antrieb weist dabei einen elektrischen Stellantriebsmotor mit einer quer zu einer Ausrückachse der Kupplung gerichteten Stellantriebsswelle auf, welche mittels einer Schnecke in ein, ein Schneckenrad darstellendes außenverzahntes Gehäusesegment eines Ausrücklagers der Kupplung eingreift. Das Ausrücklagergehäuse ist mittels eines Steilgewindes drehbar an einer ortsfesten Halterung angeordnet. Bei einer Drehbewegung der Stellantriebswelle führt das Lagergehäuse eine durch die Schnecke-Schneckenrad-Kombination einfach untersetzte Drehbewegung aus, welche infolge des Steilgewindes gleichzeitig in eine Axialbewegung umgesetzt wird. Dadurch wird ein endseitig an dem Gehäuse angeordnetes Ausrücklager auf ein Kupplungsausrückorgan zubewegt, was ein Ausrücken der Kupplung bewirkt.

Bei dieser Betätigungseinrichtung erfordert das Steilgewinde zur Verstellung des Ausrücklagergehäuses ein relativ hohes Stellmoment, wozu der radiale Abstand des Schneckentriebs von der Dreh- bzw. Ausrückachse relativ groß gewählt werden muss. Zudem ist es erforderlich, die Stellantriebswelle des außenseitig an einem etwa zylindrischen Getriebegehäuse festgelegten Elektromotors hinsichtlich deren Biege- und Torsionssteifigkeit hinreichend groß zu dimensionieren. In weiterer Hinsicht ist die axiale Breite des Schneckenradsegmentes so zu wählen, dass bei einem Betätigungsvorgang ein Eingriff mit der Schnecke über den gesamten Stellweg sichergestellt ist. Da das Schneckenradsegment zusätzlich zu einer Drehbewegung entgegen der Wirkung der Membranfeder axial verlagert wird, treten an dem Schneckengetriebe sehr hohe Reibungskräfte auf, die den Wirkungsgrad der Betätigungseinrichtung ungünstig beeinflussen.

Die US 2007/0137911 A1 offenbart eine gattungsgemäße Antriebseinheit mit einer elektromotorischen Betätigungseinrichtung die jedoch außerhalb des von Stator umschlossenen Aufnahmeraums angeordnet ist.

Von dem erläuterten Stand der Technik ausgehend, stellt sich die Erfindung die Aufgabe, eine gattungsgemäße Antriebseinheit insbesondere im Hinblick auf die Betätigungseinrichtung der Kupplung zu verbessern.

Die Aufgabe wird gemäß Patentanspruch 1 durch eine gattungsgemäße Antriebseinheit gelöst, welche zusätzlich das kennzeichnende Merkmal des Anspruchs aufweist. Die Erfindung sieht vor, bei einer Antriebseinheit der eingangs genannten Art die Betätigungseinrichtung mit einem elektrischen Stellantriebsmotor und mit einer Stellantriebswelle auszubilden, welche in Wirkverbindung mit einer Ausrückanordnung steht. Die Ausrückanordnung überführt eine Rotationsbewegung der Stellantriebswelle in eine auf das Ausrückorgan der Kupplung wirkende Translationsbewegung. Die Ausrückanordnung umfasst ein drehbares und axial zum Ausrückorgan festgelegtes Eingangselement und ein zu diesem axial verlagerbares Ausgangselement , welches mit dem Ausrückorgan in Wirkverbindung steht.

Auf diese Weise kann das mit der Stellantriebswelle zusammenwirkende Eingangselement der Ausrückanordnung ausschließlich eine Dreh- bzw. Verschwenkbewegung um eine Ausrückachse ausführen, wodurch die an dieser Position wirkenden Reibkräfte reduziert werden und der Wirkungsgrad der Betätigungseinrichtung insgesamt erhöht werden kann. Gegenüber einer aus dem Stand der Technik bekannten Betätigungseinrichtung kann auf die aufwändige Verlegung von Druckleitungen und die erforderlichen hydraulischen oder pneumatischen Kupplungsstellen verzichtet werden. Die Verlegung von elektrischen Kabeln zur Ansteuerung eines Stellantriebsmotors gestaltet sich vergleichsweise einfach.

In den abhängigen Ansprüchen sind vorteilhafte Ausgestaltungen und Weiterbildungen der Erfindung angegeben.

Gemäß einer ersten vorteilhaften Weiterbildung wird vorgeschlagen, zwischen der Stellantriebswelle und dem Eingangselement der Ausrückanordnung ein Untersetzungsgetriebe anzuordnen, wobei dieses insbesondere mit einer ersten und mit einer zweiten Getriebestufe ausgeführt sein kann Dadurch kann der Stellantriebsmotor bezüglich seines Nenndrehmoments vergleichsweise niedrig und stattdessen auf eine hohe Drehzahl ausgelegt und dadurch sehr kompakt aufgebaut werden. Ein durch die Ausgangsdrehzahl des Stellantriebsmotors und der Eingangsdrehzahl der Ausrückanordnung definierte Übersetzungsverhältnis i ist bevorzugt größer als 50, besonders bevorzugt größer als 100, insbesondere größer als 120. Durch die zumindest zweistufige Untersetzung, die vorteilhafterweise im Bereich der Ausrückanordnung angeordnet ist, kann die Stellantriebswelle vergleichsweise kurz ausgeführt werden. Wegen des von der Stellantriebswelle relativ geringeren zu übertragenden Drehmoments braucht diese weiterhin auch nur einen relativ kleinen Durchmesser aufzuweisen. Mit anderen Worten ist der durch die Stellantriebswelle beanspruchte axiale Bauraumbedarf vergleichsweise gering.

Das Verhältnis von einem axialen Stellweg des Ausgangselementes der Ausrückanordnung zu einem Drehwinkel der Stellantriebswelle kann grundsätzlich linear sein. Es kann sich jedoch auch alternativ als besonders vorteilhaft erweisen, wenn dieses Verhältnis einen nichtlinearen Verlauf aufweist. Eine solche, über den Stellweg der Ausrückeinrichtung variable Übersetzung der Betätigungseinrichtung kann besonders in Verbindung mit einer variablen Übersetzung des Ausrückorgans, zum Beispiel einer Membranfeder, günstig sein. Das kann der Fall sein, wenn sich der am Eingangsbereich der Membranfeder durch die Ausrückeineinrichtung eingeprägte Stellweg in einem nichtlinearen Zusammenhang zu einem am Ausgangsbereich der Membranfeder erzeugten Axialhub verhält. In weiterer Hinsicht kann jedoch auch bei einer vorliegenden linearen Übertragungscharakteristik des Ausrückorgans eine eingangs erläuterte nichtlineare Übersetzungscharakteristik zur bereichsweisen Erhöhung der an dem Ausrückorgan angreifenden Ausrückkraft günstig sein.

Gemäß einer Ausführungsform der Erfindung ist es von Vorteil, die Ausrückanordnung als Kugelrampentrieb auszuführen. Bevorzugt sind dabei das Eingangs- und das Ausgangselement mit entsprechenden Kugelrampen bzw. -bahnen und zwischen diesen laufenden Kugeln ausgeführt und axial zueinander angeordnet. Besonders bevorzugt sind die Kugelbahnen bzw. -rampen stirnseitig am Eingangs- und Ausgangselement angeordnet, was eine platzsparende und nur geringe radiale Ausdehnung der Ausrückanordnung zur Folge hat.

Günstigerweise umfasst eine erste Getriebestufe des Untersetzungsgetriebes ein Schneckengetriebe, wobei die Stellantriebswelle eine Schnecke trägt oder mit einer Schnecke koppelbar ist, welche mit einem Schneckenrad zusammenwirkt. Dieses Schneckenrad kann separat oder in Baueinheit mit einem Stirnrad ausgeführt sein, welches als Bestandteil einer zweiten Getriebestufe des Untersetzungsgetriebes dient und das mit einem weiteren, bevorzugt mit dem Eingangselement der Ausrückanordnung ausgeführten oder auf diesem angeordneten weiteren Stirnrad zur Übertragung und Untersetzung einer Stellantriebsdrehbewegung im Eingriff steht.

Mit besonderem Vorteil ist die Betätigungseinrichtung selbsthemmend ausgeführt, so dass das Ausrückorgan der angeschlossenen Kupplung auch bei stromlosem Stellantriebsmotor in der zuletzt angefahrenen Axialstellung verbleibt. Die Selbsthemmung kann besonders bevorzugt, jedoch nicht ausschließlich mittels eines Schneckengetriebes, also zwischen einer Schnecke und einem Schneckenrad realisiert werden. Alternativ dazu kann die Betätigungseinrichtung mit besonderem sicherheitsstechnischen Vorteil auch selbstrückstellend ausgeführt sein.

Eine besonders bauraumsparende Bauweise der Antriebseinheit ist erzielbar, indem die Stellantriebswelle quer zur Drehachse A des Antriebsaggregats gerichtet ist und axial benachbart zu dem Stator verläuft und indem der Stellantriebsmotor radial außerhalb der als Antriebsaggregat dienenden elektrischen Maschine angeordnet ist. Dabei können sich der Stellantriebsmotor und das Antriebsaggregat bauraumsparend gegenseitig axial überlappen. Der Stellantriebsmotor kann vorzugsweise an einem das Antriebsaggregat umgebenden Gehäuse festgelegt werden, wo dieser zu Wartungszwecken oder zum Austausch besonders leicht zugängig ist.

Die Betätigungseinrichtung kann insbesondere mit der Stellantriebswelle, gegebenenfalls mit dem Untersetzungsgetriebe und mit der Ausrückanordnung zumindest mittelbar am Stator der elektrischen Maschine festgelegt werden und sich gegenüber einer wirkenden Kupplungsbetätigungskraft abstützen. Dazu eignet sich vorzugsweise ein Statorträger oder ein mit dem Stator fest verbundenes weiteres Element, wie beispielsweise eine mit dem Stator verbundene Gehäusewandung oder dergleichen.

Gemäß einer Weiterbildung der Erfindung weist die Ausrückanordnung eine Einrichtung zum Ausgleich eines Belagverschleißes der Reibscheibe auf, welche unabhängig von einem Verschleißgrad der Reibscheibe den ständigen Anlagekontakt der Membranfeder am Ausrücklager bewirkt.

Nachfolgend wird die Erfindung beispielhaft unter Bezug auf die beigefügten Figuren beschrieben.

Es zeigen:
Fig. 1 eine Axialschnittdarstellung einer Antriebseinheit mit elektrischen Maschine, einer Reibungskupplung und einer Betätigungseinrichtung zur Betätigung der Kupplung;

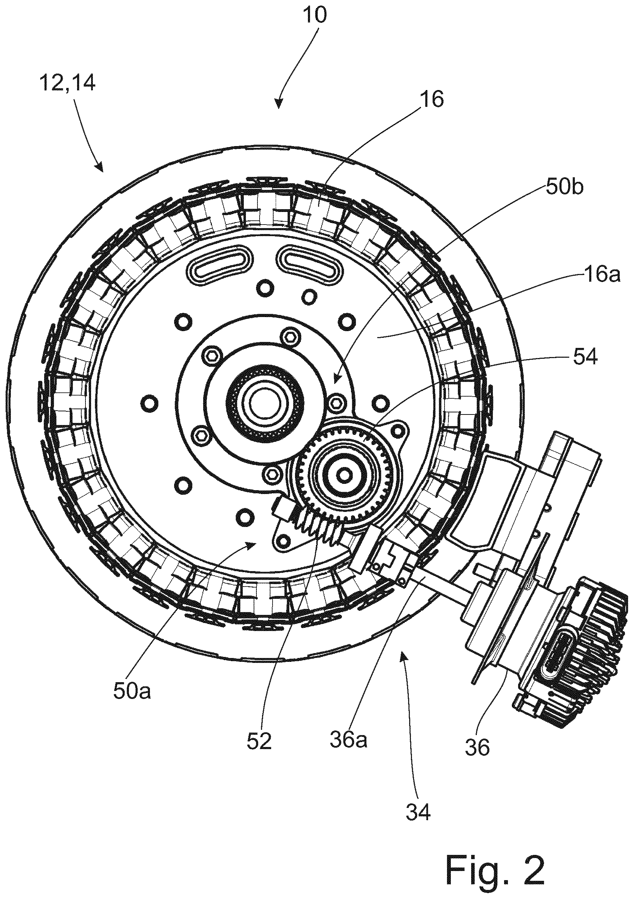

Fig. 2 eine stirnseitige Ansicht der Antriebseinheit von Fig. 1 mit Blick auf einen Stellantriebsmotor und eine erste Getriebeuntersetzung;

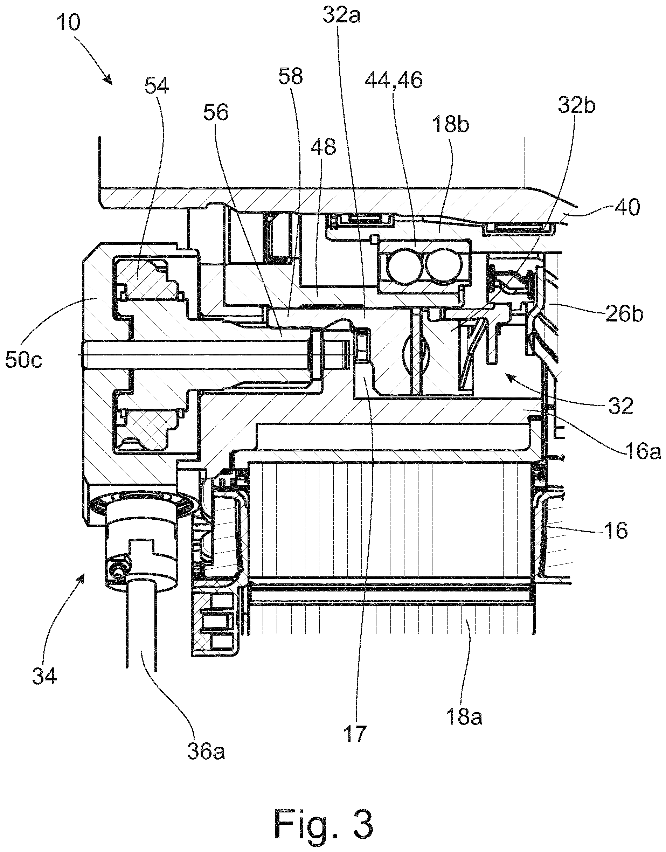

Fig. 3 ein vergrößerter Ausschnitt aus Fig. 1 mit der Ausrückanordnung der Kupplung;

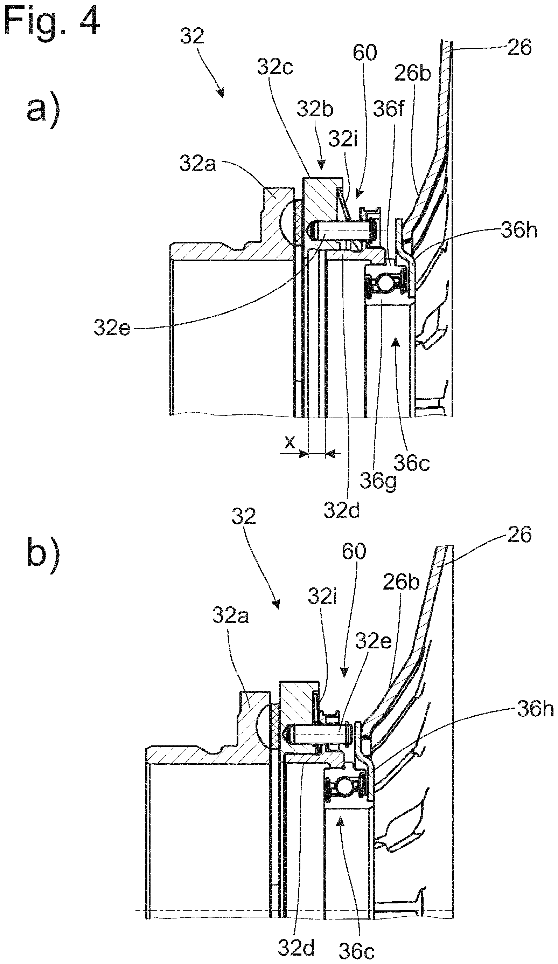

Fig. 4a eine Darstellung der Ausrückanordnung mit einer Einrichtung zum Ausgleich eines Belagverschleißes der Kupplungsreibscheibe im Neuzustand der Kupplungsreibscheibe;
Fig. 4b die Darstellung gemäß Fig. 4a in einem Verschleißzustand am Lebensdauerende der Kupplungsreibscheibe.

Die in den Figuren gezeigte Antriebseinheit 10 für ein Hybridfahrzeug umfasst zunächst ein als Elektromaschine 12 ausgebildetes Antriebsaggregat 14 mit einem Stator 16 und mit einem koaxial zu diesem um eine Drehachse A drehbar gelagerten Rotor 18. Die Elektromaschine 12 ist vorliegend als Außenläufermaschine ausgeführt und kann jedoch in Abhängigkeit von den vorliegenden Bauraumverhältnissen prinzipiell auch als Innenläufermaschine ausgebildet sein.

Die Antriebseinheit 10 umfasst weiter eine hier in Baueinheit mit der Elektromaschine 12 ausgebildete Kupplung 20, insbesondere eine schaltbare Reibungskupplung zur Herstellung einer Drehmitnahmeverbindung des Rotors 18 mit zumindest einem weiteren Antriebselement des Fahrzeugantriebsstrangs. Der Rotor 18 umfasst einen magnetisch aktiven Abschnitt 18a mit einem Blechpaket und daran angeordneten Permanentmagneten und umfasst weiter einen hier topfförmig geformten Rotorträger 18b.

Der Rotorträger 18b trägt zur Ausbildung der Kupplung 20 eine mit diesem drehbare, ringförmige Druckplattenbaugruppe 22, die in Richtung auf eine drehfest mit dem Rotor 18 verbundene Anpressplatte 24 verlagerbar ist. Die Druckplattenbaugruppe 22 weist dazu mehrere am Umfang verteilte axiale Fortsätze 22a auf, welche sich durch axiale Öffnungen des Rotorträgers 18b erstrecken. Zur Übertragung einer Betätigungskraft auf die Druckplattenbaugruppe 22 dient ein als Membranfeder 26 ausgebildetes Ausrückorgan 28. Die Membranfeder 26 ist an einem axialen Schneidfortsatz 30 des Rotorträgers 18b verschwenkbar gelagert und liegt mit einem radial äußeren Ringabschnitt 26a an den Fortsätzen 22a an und mit sich nach radial innen erstreckenden Federzungen 26b an einer Ausrückanordnung 32 an.

Die Ausrückanordnung 32 ist ein Bestandteil einer Betätigungseinrichtung 34 zur Betätigung der Reibungskupplung 20, mittels der die inneren Abschnitte der Membranfederzungen 26b axial verlagerbar sind und über welche die Membranfeder 26 mittels der zuvor erläuterten Hebelanordnung die Druckplattenbaugruppe 22 axial beaufschlagen kann.

Axial zwischen der Druckplattenbaugruppe 22 und der Anpressplatte 24 ist eine gleichfalls axial verlagerbare Reibscheibe 35 vorgesehen, die bei geschlossener Kupplung 20 ein Drehmoment der Elektromaschine 12 und/oder ein auf den Rotor 18 einleitbares Drehmoment aufnehmen kann. Zu letzterem Zweck weist die mit dem Rotor 18 verbundene oder dort ausgeführte Anpressplatte 24 eine Drehmitnahmeanordnung 38 auf. Vorliegend handelt es sich dabei um eine mit der Anpressplatte 24 verbundene Nabe 38a, welche ein Formschlussprofil 38b in der Art einer Verzahnung, insbesondere einer Stirnverzahnung trägt. Die Nabe 38 kann auf diese Weise einfach mit weiteren Elementen des Fahrzeugantriebsstranges, zum Beispiel mit einem nachfolgenden Getriebe wirkverbunden werden.

Die Reibscheibe bzw. Kupplungsscheibe 35 steht mit einer zentral innerhalb der Elektromaschine 12 durchgeführten Antriebswelle 40 in Drehmitnahmeverbindung, welche ein Drehmoment beispielsweise auf eine Kurbelwelle eines Verbrennungsmotors des Kraftfahrzeuges weiterleiten kann. Selbstverständlich kann bei umgekehrtem Drehmomentverlauf und geschlossener Kupplung 20 ein von einem Verbrennungsmotor abgegebenes Drehmoment über die Antriebswelle 40 und die Reibscheibe 35 auf den Rotor 18 wirken und gleichzeitig über die Verbindungsanordnung an weitere, hier nicht dargestellte Antriebsstrangelemente abgegeben werden.

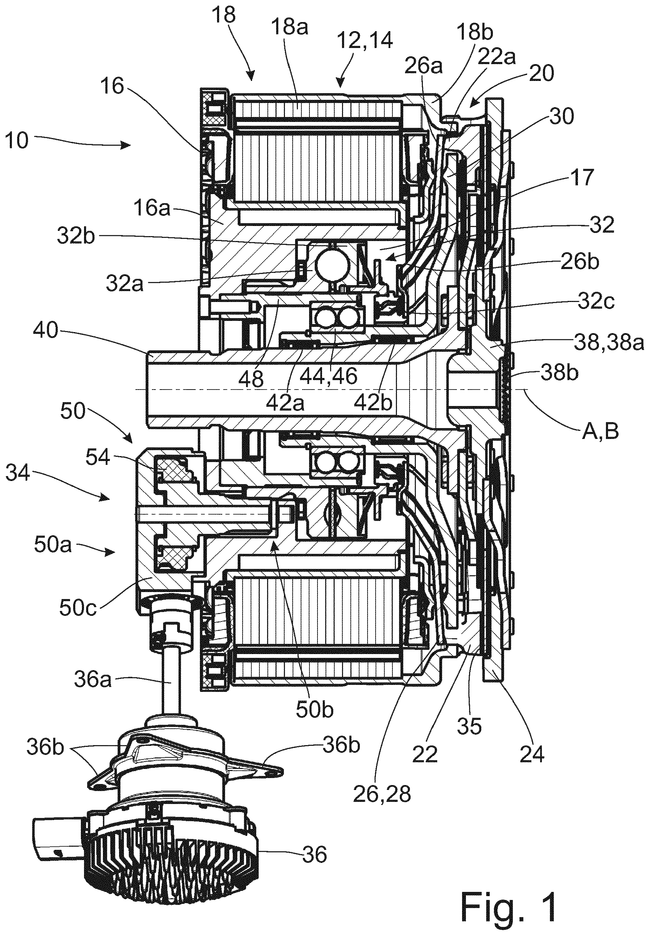

Wie in Fig. 1 zu erkennen, ist die Antriebswelle 40 im Innenraum des topfförmigen Rotorträgers 18b mittels zwei axial voneinander beabstandeten Wälzlageranordnungen 42a; 42b sowohl radial als auch axial gelagert.

Der Rotor 18 ist seinerseits mittels einer an einem Statorträger 16a festgelegten Lageranordnung 44 konzentrisch zu dem Stator 16 drehbar gelagert und gleichfalls axial zum Stator 16 festgelegt. Diese Lageranordnung 44 ist im Ausführungsbeispiel als Wälzlager 46, insbesondere als ein zweireihiges Kugellager ausgebildet, welches innerhalb eines hülsenförmigen und sich axial, zentral innerhalb des Stators 16 am Statorträger 16a erstreckenden Lagerträgers 48 aufgenommen ist.

Radial zwischen dem Statorträger 16a und dem Lagerträger 48 ist ein ringförmiger Aufnahmeraum 17 ausgebildet, der wie nachfolgend genauer ausgeführt, zumindest einen Teil der Betätigungseinrichtung 34 zur Betätigung der Reibungskupplung 20 aufnimmt.

Die Betätigungseinrichtung 34 umfasst einen elektrischen Stellantriebsmotor 36 mit einer quer zur Drehachse A des Antriebsaggregats 12, 14 gerichteten Stellantriebswelle 36a und die bereits erwähnte Ausrückanordnung 32. Der Stellantriebsmotor 36 ist radial außerhalb der Elektromaschine 12 angeordnet. Die Stellantriebswelle 36a verläuft axial benachbart zu dem Stator 16 und quer, insbesondere im Wesentlichen senkrecht zur Drehachse A der Elektromaschine, welche hierbei mit einer Ausrückachse B der Ausrückanordnung 32 zusammenfällt.

Die dargestellte Antriebseinheit 10 ist zur Anordnung in einem zeichnerisch nicht dargestellten Gehäuse vorgesehen, beispielweise in einem Getriebegehäuse oder in einem davon separaten Zwischengehäuse des Fahrzeugantriebsstranges. Der Stellantriebsmotor 36 kann dabei mittels mehrerer Befestigungslaschen 36b an der Außenseite des Gehäuses festgelegt werden.

Die Ausrückanordnung 32 steht mit der Stellantriebswelle 36a in Wirkverbindung und ist dazu ausgebildet, eine Rotationsbewegung der Stellantriebswelle 36a in eine auf das Ausrückorgan 28 der Kupplung 20 wirkende Translationsbewegung zu überführen.

Zu diesem Zweck umfasst die Ausrückanordnung 32 ein drehbares und axial zum Ausrückorgan 28 festgelegtes Eingangselement 32a und ein zu diesem axial verlagerbares Ausgangselement 32b, welches zur Drehentkopplung über ein Ausrücklager 36c mit dem Ausrückorgan 28, d.h. der Membranfeder 26 in Wirkverbindung steht. Im Ausführungsbeispiel ist die Ausrückanordnung 32 als Kugelrampentrieb ausgeführt, wobei zwischen dem Eingangselement 32a und dem Ausgangselement 32b in Rampen geführte Kugeln laufen.

Die Ausrückanordnung 32 weist weiter eine Einrichtung 60 zum Ausgleich eines Belagverschleißes der Reibscheibe 35 auf, welche unabhängig von einem Verschleißgrad der Reibscheibe 35 den ständigen Anlagekontakt der Membranfeder 26 an dem Ausrücklager 36c bewirkt. Zu diesem Zweck umfasst das Ausgangselement 32b einen mittels Führungsbolzen 32e zu einem Grundkörper 32c axial verlagerbaren Lagerträger 32d, welcher das Ausrücklager 36c mit einem seiner Lagerringe 36f, hier dem äußeren Lagerring 36f aufnimmt. Der andere, mit der Kupplung 20 umlaufende Lagerring 36g liegt über eine Anlagescheibe 36h an den freien Enden der Federzungen 26b an. Der axiale Bewegungsraum des Lagerträgers 32d ist einerseits in Richtung der Kupplung 20 durch einen Anschlag am Führungsbolzen 32e und andererseits in der entgegengesetzten Richtung durch einen Anschlag am Grundkörper 32c eingeschränkt. Axial zwischen dem Lagerträger 32d und dem Grundkörper 32c ist eine elastisches Element 32i, hier eine Tellerfeder eingespannt, welche den Lagerträger 32d in Richtung der Membranfeder 26 belastet und das Ausrücklager 36c mittels der Anlagescheibe 36h an den Membranfederzungen 26b zur Anlage bringt. Der Lagerträger 32d ist somit im unverschlissenen Neuzustand der Reibscheibe 35 gegenüber dem Grundkörper 32c des Ausgangselements 32b um einen Wegbetrag verschoben, welcher vorzugsweise zumindest gleich oder größer einem nachfolgend erläuterten Ausrück-Verschleißweg x ist.

Mit zunehmendem Verschleiß der Reibscheibe 35 verlagern sich die freien Enden der Federzungen 26b im geschlossenem Zustand der Kupplung 20 axial in Richtung der Ausrückanordnung 32, wobei der Betrag dieser Verlagerung vom Neuzustand bis zum Lebensdauerende der Reibscheibe 35 den Ausrück-Verschleißweg x darstellt. Mit steigendem Verschleiß wird in Bezug zum geschlossenen, d.h. unbetätigten Zustand der Kupplung 20 das Ausrücklager 36c unter Überwindung der Federkraft des elastischen Elements 32i in Richtung des Grundkörpers 32c verlagert bis der Ausrück-Verschleißweg x aufgebraucht ist und dessen Lagerträger 32d am Grundkörper 32c zur Anlage kommt.

Hinsichtlich der Einleitung einer Betätigungskraft sind das elastische Element 32i und die Membranfeder 26 in Reihe geschaltet, sodass bei einer Betätigung der Kupplung 20 zunächst der vom aktuellen Verschleißzustand jeweils vorhandene restliche Verschleißweg unter Spannung des elastischen Elements 32i überwunden bzw. aufgebraucht wird und wobei erst danach die Membranfeder 26 verschwenkt wird.

Zur Erzeugung einer Drehzahluntersetzung bzw. einer Drehmomentübersetzung ist zwischen der Stellantriebswelle 36a und der Ausrückanordnung 32 ein Untersetzungsgetriebe 50 mit zumindest einer ersten und einer zweiten Getriebestufe 50a; 50 b angeordnet. Die erste Getriebestufe 50a des Untersetzungsgetriebes 50 ist durch ein Schneckengetriebe realisiert, wozu die Stellantriebswelle 36a selbst bzw. hier ein mit dieser verbundener oder verbindbarer Antriebswellenabschnitt eine Schnecke 52 umfasst, welche mit einem Schneckenrad 54 zusammenwirkt. Das Schneckenrad 54 ist zweifach gelagert und dazu am Statorträger 16a und an einem Getriebegehäuse 50c drehbar angeordnet.

Die zweite Getriebestufe 50b umfasst ein Stirnradgetriebe aus einer Paarung von zwei Stirnrädern 56; 58. Ein erstes Stirnrad 56 ist dabei in Baueinheit gemeinsam mit dem Schneckenrad 54 angeordnet. Das zweite Stirnrad 58 ist am Eingangselement 32a der Ausrückanordnung 32 ausgebildet und mit diesem drehbar auf dem Lagerträger 48 positioniert. Das Untersetzungsgetriebe 50 und die Ausrückanordnung 32 sind somit am Statorträger 16a abgestützt angeordnet. Die erste Getriebestufe 50a befindet sich axial unmittelbar benachbart zur Elektromaschine 12, während die zweite Getriebestufe 50b und die Ausrückanordnung 32 innerhalb des Aufnahmeraums 17 angeordnet sind.

Durch das Zusammenspiel der beiden Getriebestufen 50a, b mit einer zusätzlichen Übersetzung der Ausrückanordnung 32 selbst, d.h. bei der Wandlung der Drehbewegung in die Translationsbewegung, kann insgesamt eine nichtlineare Charakteristik der Betätigungseinrichtung 34 erzeugt werden, wobei ein axialer Stellweg des Ausgangselementes 32b der Ausrückanordnung 32 sich nichtlinear zu einem Drehwinkel der Stellantriebswelle 36a verhält. Der nichtlineare Beitrag wird insbesondere durch eine entsprechende Ausgestaltung der Ausrückanordnung 32, hier des Kugelrampenantriebs, erzeugt. Alternativ kann auch insgesamt eine lineare Charakteristik der Betätigungseinrichtung 34 dargestellt werden.

Des Weiteren können die zwischen den Elementen der Betätigungseinrichtung 34 wirkenden Reibkräfte so groß gewählt werden, dass bei aktivierter Betätigungseinrichtung 34, im Ausführungsbeispiel bei ausgerückter Kupplung 20, eine selbsttätige Rückstellung unterbleibt, das heißt, dass die Betätigungseinrichtung 34 selbsthemmend ausgeführt ist.

Es kann alternativ jedoch ebenso beispielsweise aus sicherheitstechnischen Aspekten von Vorteil sein, die Reibung der Betätigungseinrichtung 34 zur Erzielung einer selbsttätigen Rückstellung zu minimieren, wobei die erforderliche Rückstellkraft durch die im Ausrückorgan 28 selbst oder durch die in separaten Rückstellfedern bei einem Betätigungsvorgang gespeicherte Energie bereitgestellt wird. Dazu kann z.B. eine geeignete Wahl der Schneckenpaarauslegung, d.h. der Schnecke 52 und des Schneckenrades 54 vorgenommen werden. Ohne Bestromung des Stellantriebsmotors 36 geht die Kupplung 20 in ihren Normalzustand über, der vorliegend als ein normal-geschlossen-Zustand ausgeführt ist.

Der Stellantriebsmotor kann alternativ auch innerhalb der radialen Erstreckung der Elektromaschine angeordnet werden, wo dieser vor äußeren Einflüssen geschützt ist und wobei lediglich die elektrischen Zuleitungen an diesen herangeführt werden brauchen.

### Bezugszeichen

- 10: Antriebseinheit
- 12: Elektromaschine
- 14: Antriebsaggregat
- 16: Stator
- 16a: Statorträger
- 17: Aufnahmeraum
- 18: Rotor
- 18a: magnetisch aktiver Abschnitt
- 18b: Rotorträger
- 20: Kupplung
- 22: Druckplattenbaugruppe
- 22a: axiale Fortsätze
- 24: Anpresspatte
- 26: Membranfeder
- 26a: Ringabschnitt
- 26b: Federzungen
- 28: Ausrückorgan
- 30: Schneidfortsatz
- 32: Ausrückanordnung
- 32a: Eingangselement
- 32b: Ausgangselement
- 32c: Grundkörper
- 32d: Lagerträger
- 32e: Führungsbolzen
- 32i: elastisches Element
- 34: Betätigungseinrichtung
- 35: Reibscheibe
- 36: Stellantriebsmotor
- 36a: Stellantriebswelle
- 36b: Befestigungslaschen
- 36c: Ausrücklager
- 36f: feststehender Lagerring
- 36g: umlaufender Lagerring
- 36h: Anlagescheibe
- 38: Drehmitnahmeanordnung
- 38a: Nabe
- 38b: Formschlussprofil
- 40: Antriebswelle
- 42a,b: Wälzlager
- 44: Lageranordnung
- 46: Wälzlager
- 48: Lagerträger
- 50: Untersetzungsgetriebe
- 50a,b: Getriebestufe
- 50c: Getriebegehäuse
- 52: Schnecke
- 54: Schneckenrad
- 56: Stirnrad
- 58: Stirnrad
- 60: Verschleißausgleichseinrichtung

- A: Drehachse
- B: Ausrückachse

## Patentansprüche

1. Antriebseinheit (10) für ein Kraftfahrzeug umfassend
- ein als Elektromaschine (12) ausgebildetes Antriebsaggregat (14) mit einem Stator (16) und mit einem koaxial zu diesem um eine Drehachse A drehbar gelagerten Rotor (18),
- eine schaltbare Kupplung (20) zur Herstellung einer Drehmitnahmeverbindung des Rotors (18) mit einem Antriebselement (40), wobei
- die Kupplung (20) ein Ausrückorgan (28) aufweist, welches mittels einer Betätigungseinrichtung (34) axial verlagerbar ist und wobei die Betätigungseinrichtung (34) zumindest teilweise in einem von dem Stator (16) umschlossenen Aufnahmeraum (17) angeordnet ist, **dadurch gekennzeichnet, dass** die Betätigungseinrichtung (34) umfasst
- einen elektrischen Stellantriebsmotor (36) mit einer Stellantriebswelle (36a) und
- eine mit der Stellantriebswelle (36a) in Wirkverbindung stehende Ausrückanordnung (32), welche eine Rotationsbewegung der Stellantriebswelle (36a) in eine auf das Ausrückorgan (28) der Kupplung (20) wirkende Translationsbewegung überführt und wobei
- die Ausrückanordnung (32) ein drehbares und axial zum Ausrückorgan (28) festgelegtes Eingangselement (32a) und ein zu diesem axial verlagerbares Ausgangselement (32b) umfasst, welches mit dem Ausrückorgan (28) in Wirkverbindung steht.

2. Antriebseinheit nach Anspruch 1, **dadurch gekennzeichnet, dass** zwischen der Stellantriebswelle (36a) und der Ausrückanordnung (32) ein Untersetzungsgetriebe (50) angeordnet ist.

3. Antriebseinheit nach Anspruch 2, **dadurch gekennzeichnet, dass** das Untersetzungsgetriebe (50) mit einer ersten und einer zweiten Getriebestufe (50a); (50b) ausgeführt ist.

4. Antriebseinheit nach einem der Ansprüche 1 bis 3, **dadurch gekennzeichnet, dass** ein axialer Stellweg des Ausgangselementes (32b) der Ausrückanordnung (32) sich nichtlinear zu einem Drehwinkel der Stellantriebswelle (36a) verhält.

5. Antriebseinheit nach einem der Ansprüche 1 bis 4, **dadurch gekennzeichnet, dass** die Ausrückanordnung (32) als Kugelrampentrieb ausgeführt ist.

6. Antriebseinheit nach einem der Ansprüche 2 bis 5, **dadurch gekennzeichnet, dass** eine erste Getriebestufe (50a) des Untersetzungsgetriebes (50) ein Schneckengetriebe umfasst.

7. Antriebseinheit nach einem der Ansprüche 2 bis 6, **dadurch gekennzeichnet, dass** eine zweite Getriebestufe (50b) des Untersetzungsgetriebes (50) ein Stirnradgetriebe umfasst ist.

8. Antriebseinheit nach einem der Ansprüche 1 bis 7, **dadurch gekennzeichnet, dass** die Betätigungseinrichtung (34) selbsthemmend ausgeführt ist.

9. Antriebseinheit nach einem der Ansprüche 1 bis 7, **dadurch gekennzeichnet, dass** die Betätigungseinrichtung (34) selbstrückstellend ausgeführt ist.

10. Antriebseinheit nach einem der Ansprüche 1 bis 8 oder 9, **dadurch gekennzeichnet, dass** die Stellantriebswelle (36a) quer zur Drehachse A des Antriebsaggregats (14) gerichtet ist und axial benachbart zu dem Stator (16) verläuft und dass der Stellantriebsmotor (36) radial außerhalb der elektrischen Maschine (12) angeordnet ist.

11. Antriebseinheit nach einem der Ansprüche 1 bis 10, **dadurch gekennzeichnet, dass** die Betätigungseinrichtung (34) zumindest mittelbar am Stator (16) der elektrischen Maschine festgelegt ist.

12. Antriebseinheit nach einem der Ansprüche 1-11, **dadurch gekennzeichnet, dass** die Ausrückanordnung 32 eine Einrichtung 60 zum Ausgleich eines Belagverschleißes der Reibscheibe 35 aufweist.

## Claims

1. Drive unit (10) for a motor vehicle comprising
- a drive unit (14) which is configured as an electric machine (12) with a stator (16) and with a rotor (18) which is mounted such that it can be rotated coaxially with respect to the latter about a rotational axis A,
- a switchable clutch (20) for establishing a rotary driving connection of the rotor (18) to a drive element (40),
- the clutch (20) having a release member (28) which can be moved axially by means of an actuating device (34), and the actuating device (34) being arranged at least partially in a receiving space (17) which is enclosed by the stator (16),
**characterized in that** the actuating device (34) comprises
- an electric actuating drive motor (36) with an actuating drive shaft (36a), and
- a release arrangement (32) which is operatively connected to the actuating drive shaft (36a) and converts a rotational movement of the actuating drive shaft (36a) into a translational movement which acts on the release member (28) of the clutch (20), and
- the release arrangement (32) comprising a rotatable input element (32a) which is fixed axially to the release member (28), and an output element (32b) which can be moved axially with respect to the said input element (32a) and is operatively connected to the release member (28).

2. Drive unit according to Claim 1, **characterized in that** a step-down gear mechanism (50) is arranged between the actuating drive shaft (36a) and the release arrangement (32).

3. Drive unit according to Claim 2, **characterized in that** the step-down gear mechanism (50) is configured with a first and a second gear stage (50a); (50b).

4. Drive unit according to one of Claims 1 to 3, **characterized in that** an axial actuating travel of the output element (32b) of the release arrangement (32) behaves in a non-linear manner with respect to a rotary angle of the actuating drive shaft (36a).

5. Drive unit according to one of Claims 1 to 4, **characterized in that** the release arrangement (32) is configured as a ball ramp drive.

6. Drive unit according to one of Claims 2 to 5, **characterized in that** a first gear stage (50a) of the step-down gear mechanism (50) comprises a worm gear mechanism.

7. Drive unit according to one of Claims 2 to 6, **characterized in that** a second gear stage (50b) of the step-down gear mechanism (50) comprises a spur gear mechanism.

8. Drive unit according to one of Claims 1 to 7, **characterized in that** the actuating device (34) is of self-locking configuration.

9. Drive unit according to one of Claims 1 to 7, **characterized in that** the actuating device (34) is of self-resetting configuration.

10. Drive unit according to one of Claims 1 to 8 or 9, **characterized in that** the actuating drive shaft (36a) is directed transversely with respect to the rotational axis A of the drive unit (14) and runs axially adjacently with respect to the stator (16), and **in that** the actuating drive motor (36) is arranged radially outside the electric machine (12).

11. Drive unit according to one of Claims 1 to 10, **characterized in that** the actuating device (34) is fixed at least indirectly on the stator (16) of the electric machine.

12. Drive unit according to one of Claims 1 to 11, **characterized in that** the release arrangement 32 has a device 64 compensating for lining wear of the friction disc 35.

## Revendications

1. Unité d'entraînement (10), destinée à un véhicule automobile, comprenant
- un groupe d'entraînement (14) conçu comme une machine électrique (12) et comprenant un stator (16) et un rotor (18) monté coaxialement audit stator de manière rotative sur un axe de rotation A,
- un accouplement commutable (20) destiné à réaliser une liaison d'entraînement en rotation du rotor (18) avec un élément d'entraînement (40),
- l'accouplement (20) comportant un élément de désaccouplement (28) qui peut être déplacé axialement au moyen d'un dispositif d'actionnement (34) et le dispositif d'actionnement (34) étant disposé au moins partiellement dans un espace de réception (17) entouré par le stator (16),
**caractérisé en ce que** le dispositif d'actionnement (34) comprend
- un moteur de commande électrique (36) comportant un arbre de commande (36a)
et
- un ensemble de désaccouplement (32) qui est relié fonctionnellement à l'arbre de commande (36a) et qui convertit le mouvement de rotation de l'arbre de commande (36a) en un mouvement de translation agissant sur l'élément de désaccouplement (28) de l'accouplement (20) ;
- l'ensemble de désaccouplement (32) comprenant un élément d'entrée rotatif (32a) fixé axialement à l'élément de désaccouplement (28) et un élément de sortie (32b) qui peut être déplacé axialement de celui-ci et qui est relié fonctionnellement à l'élément de désaccouplement (28).

2. Unité d'entraînement selon la revendication 1, **caractérisée en ce qu'**une transmission (50) est disposée entre l'arbre de commande (36a) et l'ensemble de désaccouplement (32).

3. Unité d'entraînement selon la revendication 2, **caractérisée en ce que** la transmission (50) comporte un premier et un deuxième étage de transmission (50a ; 50b).

4. Unité d'entraînement selon l'une des revendications 1 à 3, **caractérisée en ce qu'**un déplacement axial de l'élément de sortie (32b) de l'ensemble de désaccouplement (32) se comporte de manière non linéaire par rapport à un angle de rotation de l'arbre de commande (36a).

5. Unité d'entraînement selon l'une des revendications 1 à 4, **caractérisée en ce que** l'ensemble de désaccouplement (32) est conçu comme un entraînement à rampe à billes.

6. Unité d'entraînement selon l'une des revendications 2 à 5, **caractérisée en ce qu'**un premier étage de transmission (50a) de la transmission (50) comprend une transmission à vis sans fin.

7. Unité d'entraînement selon l'une des revendications 2 à 6, **caractérisée en ce qu'**un deuxième étage de transmission (50b) de la transmission (50) est une transmission droite.

8. Unité d'entraînement selon l'une des revendications 1 à 7, **caractérisée en ce que** le dispositif d'actionnement (34) est conçu pour être autobloquant.

9. Unité d'entraînement selon l'une des revendications 1 à 7, **caractérisée en ce que** le dispositif d'actionnement (34) est réalisé à retour automatique.

10. Unité d'entraînement selon l'une des revendications 1 à 8 ou 9, **caractérisée en ce que** l'arbre d'actionnement (36a) est orienté transversalement à l'axe de rotation A du groupe d'entraînement (14) et s'étend de manière axialement adjacente au stator (16) et **en ce que** le moteur de commande (36) est disposé radialement à l'extérieur de la machine électrique (12).

11. Unité d'entraînement selon l'une des revendications 1 à 10, **caractérisée en ce que** le dispositif d'actionnement (34) est fixé au moins indirectement au stator (16) de la machine électrique.

12. Unité d'entraînement selon l'une des revendications 1 à 11, **caractérisée en ce que** l'ensemble de désaccouplement (32) comporte un dispositif (60) destiné à compenser une usure de la garniture du disque de friction (35).
